# EUROPEAN PATENT APPLICATION

(11) **EP 4 814 136 A1**
(43) Date of publication of application: **30.09.2026**
(21) Application number: 23959588.7
(22) Date of filing: 20.12.2023
(51) Int. Cl.: C21D 8/12, C22C 38/02, C22C 38/04, C22C 38/06, C22C 38/00, C22C 38/34

(54) **GRAIN ORIENTED ELECTRICAL STEEL SHEET AND METHOD FOR MANUFACTURING SAME**

(30) Priority: 24.11.2023 KR 20230166110
(71) Applicant: POSCO Co., Ltd, Gyeongsangbuk-do 37859 (KR)
(72) Inventor: PARK, Jong Ho, Pohang-si, Gyeongsangbuk-do 37859 (KR); KIM, Dae-Uk, Pohang-si, Gyeongsangbuk-do 37859 (KR); KIM, Wan-Yi, Pohang-si, Gyeongsangbuk-do 37859 (KR); HUH, Byungkook, Pohang-si, Gyeongsangbuk-do 37859 (KR); CHOI, Heonjo, Pohang-si, Gyeongsangbuk-do 37859 (KR)
(74) Representative: Meissner Bolte Partnerschaft mbB
(86) International application number: PCT/KR2023/021098
(87) International publication number: WO 2025/110332

(57) **Abstract**

An embodiment of the present invention provides a method for manufacturing a grain-oriented electrical steel sheet, including: manufacturing a slab including, in wt%, Si: 1.5 to 4.5%, C: 0.70% or less (excluding 0%), Mn: 1.0% or less (excluding 0%), and a balance of Fe and other inevitable impurities; hot-rolling the slab to manufacture a hot rolled sheet; cold-rolling the hot-rolled sheet to manufacture a cold-rolled sheet; primary recrystallization annealing the cold-rolled sheet; and secondary recrystallization annealing the primary recrystallization annealed steel sheet.

The secondary recrystallization annealing includes a first heating step in which a steel sheet temperature is 650°C to 900°C, a second heating step in which the steel sheet temperature is higher than 900°C and equal to or lower than a soaking temperature, and a soaking step. The first heating step is performed in an atmosphere having an oxidation ability (PH₂O/PH₂) of 0.05 to 0.40, and the second heating step is performed in an atmosphere having an oxidation ability (PH₂O/PH₂) of 0.03 or less.

## Description

### [Technical Field]

An embodiment of the present invention relates to a grain-oriented electrical steel sheet and a method for manufacturing the same. More specifically, an embodiment of the present invention relates to a grain-oriented electrical steel sheet and a method for manufacturing the same, in which an oxidation potential is appropriately controlled during a secondary recrystallization annealing process to reduce a deviation in forsterite grain size in a width direction of the steel sheet and to reduce a magnetic deviation in the width direction of the steel sheet.

### [Background Art]

A grain-oriented electrical steel sheet is a soft magnetic material having excellent magnetic properties in a rolling direction of the steel sheet by forming a so-called Goss texture, in which orientations of all grains on the surface of the steel sheet are in a {110} plane and a crystal orientation in the rolling direction is parallel to a <001> axis. Generally, the magnetic properties of an electrical steel sheet may be described by a magnetic flux density and iron loss, and a high magnetic flux density may be obtained by precisely arranging an orientation of grains in a {110}<001> orientation. An electrical steel sheet having high magnetic flux density may not only reduce the size of a core material of an electrical device but also lower hysteresis loss, thereby enabling miniaturization and high efficiency of the electrical device. Iron loss is power loss consumed as heat energy when an arbitrary alternating magnetic field is applied to a steel sheet, and it largely changes depending on a magnetic flux density and a thickness of the steel sheet, an amount of impurities in the steel sheet, specific resistance and a size of a secondary recrystallization grain, wherein the higher the magnetic flux density and the specific resistance and the lower the thickness and the amount of impurities in the steel sheet, the lower the iron loss and the higher the efficiency of the electric device.

The surface of the oriented electrical steel sheet is formed with a forsterite film during secondary recrystallization annealing and an insulating film is applied during the final heat flattening process to produce the final product. This forsterite film not only serves the purpose of providing insulation to the surface but also provides the effect of improving iron loss or magnetostriction characteristics by imparting tensile stress to the steel sheet, which is generated by a difference in thermal expansion with a base metal. The forsterite film formed on the surface of the steel sheet, depending on its formation state, determines not only the effect of improving insulation performance and magnetic properties but also commercial value such as workability in a core processing process and the appearance of the product, so the formation of a uniform and stable forsterite film is required.

To form a forsterite film in the manufacture of a grain-oriented electrical steel sheet, a steel sheet cold-rolled to a final thickness is decarburization-annealed in a humid atmosphere to perform a treatment for forming oxides mainly composed of Fe₂SiO₄ and SiO₂, which play an important role in primary recrystallization and forsterite film formation. Thereafter, an annealing separator mainly composed of MgO is applied to the steel sheet and dried, followed by winding into a coil and performing secondary recrystallization annealing to form the forsterite film.

In the secondary recrystallization annealing process, the formation reaction of the forsterite film is a film formed by the reaction between MgO, the main component of the annealing separator, and SiO2, the main component of the oxide formed in the primary recrystallization annealing (2MgO + SiO₂ -> Mg₂SiO₄). In this case, when AlN is used as an inhibitor, a spinel-structured compound such as Al₂O₃, MgO, or SiO₂ is formed near the lower portion of the forsterite film. Since the forsterite film formation behavior in this case also affects the behavior of inhibitors such as MnS and AlN in the steel, it also affects secondary recrystallization behavior, which is an essential process for having excellent magnetic properties.

That is, when the forsterite film formation reaction is delayed or proceeds non-uniformly, or when the amount and quality of the formed film are inappropriate, O and N in the annealing atmosphere easily penetrate into the steel, causing decomposition and coarsening of the inhibitors in the steel, which affects the inhibitor strength. Furthermore, the forsterite film formed during the secondary recrystallization annealing process has the effect of reducing hysteresis loss by drawing out and purifying the inhibitor that has become unnecessary after the secondary recrystallization is completed.

Therefore, the uniform formation of the forsterite film and the control process during its formation process are one of the important points that determine the quality of the grain-oriented electrical steel sheet.

### [Disclosure]

### [Technical Problem]

An embodiment of the present invention provides a grain-oriented electrical steel sheet and a method for manufacturing the same. Specifically, an embodiment of the present invention provides a grain-oriented electrical steel sheet and a method for manufacturing the same, in which an oxidation potential is appropriately controlled during a secondary recrystallization annealing process to reduce a deviation in forsterite grain size in a width direction of the steel sheet and to reduce a magnetic deviation in the width direction of the steel sheet.

### [Technical Solution]

A method for manufacturing a grain-oriented electrical steel sheet according to an embodiment of the present invention includes the steps of: preparing a slab including, in wt%, Si: 1.5 to 4.5%, C: 0.70 % or less (excluding 0%), Mn: 1.0% or less (excluding 0%), and the balance of Fe and other inevitable impurities; hot-rolling the slab to prepare a hot-rolled sheet; cold-rolling the hot-rolled sheet to prepare a cold-rolled sheet; primary recrystallization annealing the cold-rolled sheet; and secondary recrystallization annealing the primary recrystallization annealed steel sheet.

The secondary recrystallization annealing includes a first heating step in which a steel sheet temperature is 650°C to 900°C, a second heating step in which the steel sheet temperature is higher than 900°C and equal to or lower than a soaking temperature, and a soaking step.

The first heating step is performed in an atmosphere having an oxidation ability (PH₂O/PH₂) of 0.05 to 0.40, and the second heating step is performed in an atmosphere having an oxidation ability (PH₂O/PH₂) of 0.03 or less.

The slab may further include one or more of Al: 0.015 to 0.040 wt%, N: 0.0055 wt% or less, and S: 0.0055 wt% or less.

The slab may further include one or more of Sn: 0.03 to 0.10 wt%, Sb: 0.01 to 0.05 wt%, P: 0.01 to 0.10 wt%, Cu: 0.001 to 0.1 wt%, and Cr: 0.01 to 0.50 wt%.

The method for manufacturing the grain-oriented electrical steel sheet, after the primary recrystallization annealing and before the secondary recrystallization annealing, applying an annealing separator, wherein the annealing separator includes 100 parts by weight of MgO and 0.01 to 0.50 parts by weight of an additive having a melting point of 900°C or less.

The additive may include one or more of a hydroxide, a carbonate, an amide compound, a chromate, an oxide, an antimony compound, a chloride compound, a chloride oxide, a sulfur compound, a nitrogen compound, a bromide, a bromate, telluric acid, a vanadate, a borate, and a phosphorus compound.

The additive may include one or more of Li, F, Na, K, Cu, Ba, Br, Mg, Ca, Zn, Sr, Cd, B, Al, Y, Ga, In, Tl, Ti, Sn, P, Nb, Sb, Bi, S, Cr, Te, V, W, Fe, Mn, Co, and Ni.

The additive may include one or more of SrCl₂, Sb₂O₃, FeBr₂, CuCl, MnCl₂, B₂O₃, NiSO₄, CoSO₄, CuBr, and SnS.

The MgO may have a hydration moisture of 1.2 to 2.5 wt%.

The first heating step may include 10 to 50 volume% of N₂ and 50 to 90 volume% of H₂, the second heating step may include 50 volume% or less of N₂ and 50 volume% or more of H₂, and the soaking step may include 99 volume% or more of H₂.

The first heating step may be performed at a heating rate of 5°C/hr to 90°C/hr, and the second heating step may be performed at a heating rate of 5°C/hr to 30°C/hr.

After the first heating step, forsterite may be included in an amount of 2 to 15 wt% in a thickness range of 10 µm from a surface of the steel sheet toward an inner direction of the steel sheet, and after the second heating step, forsterite may be included in an amount of 85 to 100 wt%.

Another embodiment of the present invention provides a grain-oriented electrical steel sheet, including: in wt%, C: 0.005% or less (excluding 0%), Si: 1.5% to 4.5%, Mn: 1.0% or less (excluding 0%), and a balance of Fe and other inevitably included impurities, wherein a forsterite layer exists on one or both surfaces of a steel sheet substrate, and a ratio (P₂/P₁) of an average grain size (P₂) of forsterite grains present in the forsterite layer of a center portion extending from more than 30% to less than 70% of the entire width of the steel sheet from the one end portion to an average grain size (P₁) of forsterite grains present in the forsterite layer of an edge portion, the edge portion extending from one end portion in a width direction of the steel sheet to 30% of an entire width of the steel sheet, and from 70% of the entire width of the steel sheet from the one end portion to an opposite end portion, is 0.8 to 1.2.

The grain-oriented electrical steel sheet may further include one or more of Al: 0.040 wt% or less, N: 0.0050 wt% or less, and S: 0.005 wt% or less.

The grain-oriented electrical steel sheet may further include one or more of Sn: 0.03 to 0.10 wt%, Sb: 0.01 to 0.05 wt%, P: 0.01 to 0.10 wt%, Cu: 0.001 to 0.1 wt%, and Cr: 0.01 to 0.50 wt%.

The average grain size of the forsterite grains present in the forsterite layer of the edge portions may be 0.3 to 2.0 µm, and the average grain size of the forsterite grains present in the forsterite layer of the center portion may be 0.3 to 2.0 µm.

### [Advantageous Effects]

The grain-oriented electrical steel sheet according to an embodiment of the present invention may reduce magnetic deviation in a width direction of the steel sheet and uniformly obtain improved magnetic properties in the width direction of the steel sheet.

### [Description of the Drawings]

FIG. 1 is a schematic view schematically illustrating a grain-oriented electrical steel sheet according to an embodiment of the present invention.
FIG. 2 is a schematic view schematically illustrating a coil-shaped steel sheet during a secondary recrystallization annealing step in an embodiment of the present invention.

### [Mode for Invention]

It will be understood that, although the terms first, second, third, etc. may be used herein to describe various elements, components, regions, layers, and/or sections, they are not limited thereto. These terms are only used to distinguish one element, component, region, layer, or section from another element, component, region, layer, or section. Therefore, a first part, component, area, layer, or section to be described below may be referred to as second part, component, area, layer, or section within the range of the present invention.

The technical terms used herein are to simply mention a particular embodiment and are not meant to limit the present invention. An expression used in the singular encompasses an expression of the plural, unless it has a clearly different meaning in the context. In the specification, it is to be understood that the terms such as "including", "having", etc., are intended to indicate the existence of specific features, regions, numbers, stages, steps, operations, elements, components, and/or combinations thereof disclosed in the specification, and are not intended to preclude the possibility that one or more other features, regions, numbers, stages, steps, operations, elements, components, and/or combinations thereof may exist or may be added.

When referring to a part as being "on" or "above" another part, it may be positioned directly on or above the other part, or another part may be interposed therebetween. In contrast, when referring to a part being "directly above" another part, no other part is interposed therebetween.

Unless otherwise defined, all terms used herein, including technical or scientific terms, have the same meanings as those generally understood by those with ordinary knowledge in the field of art to which the present invention belongs. Terms defined in commonly used dictionaries are further interpreted as having meanings consistent with the relevant technical literature and the present disclosure, and are not to be construed as having idealized or very formal meanings unless defined otherwise.

Unless otherwise stated, % represents wt%, and 1 ppm is 0.0001 wt%.

In an embodiment of the present invention, inclusion of an additional element means replacing the balance of iron (Fe) by an additional amount of the additional elements.

Hereinafter, embodiments of the present invention will be described in detail so that those skilled in the art to which the present invention pertains may easily carry out the invention. As those skilled in the art would realize, the described embodiments may be modified in various different ways, all without departing from the spirit or scope of the present disclosure.

A method for manufacturing a grain-oriented electrical steel sheet according to an embodiment of the present invention includes the steps of: preparing a slab including, in wt%, Si: 1.5 to 4.5%, C: 0.70% or less (excluding 0%), Mn: 1.0% or less (excluding 0%), and the balance of Fe and other inevitable impurities; hot-rolling the slab to prepare a hot-rolled sheet; cold-rolling the hot-rolled sheet to prepare a cold-rolled sheet; primary recrystallization annealing the cold-rolled sheet; and secondary recrystallization annealing the primary recrystallization annealed steel sheet.

Hereinafter, each step will be described in detail.

First, a slab is prepared.

The slab includes, in wt%, Si: 1.5 to 4.5%, C: 0.70% or less (excluding 0%), Mn: 1.0% or less (excluding 0%), and the balance of Fe and other inevitable impurities.

Hereinafter, the reasons for limiting the addition amount of each element will be described.

### C: 0.70 wt% or less

Carbon (C) is an element that promotes austenite phase transformation, and it is an important element for manufacturing a grain-oriented electrical steel sheet having excellent magnetic properties by making the hot-rolled microstructure uniform and promoting the formation of Goss-oriented grains during cold rolling. When too much C is added, the primary recrystallized grains become fine due to the formation of a fine hot-rolled microstructure caused by the austenite phase transformation during hot rolling, and coarse carbides may be formed during a coiling process after hot rolling or a cooling process after hot-rolled sheet annealing, and Fe₃C (cementite) may be formed at room temperature, causing non-uniformity in the microstructure. In addition, in a decarburization process after cold rolling, the time required for decarburizing to 30 ppm or less increases, which leads to a problem in that fayalite and silica are excessively formed on the surface of the steel sheet. Therefore, C may be included in an amount of 0.70 wt% or less. More specifically, it may be included in an amount of 0.01 to 0.50 wt%. Even more specifically, it may be included in an amount of 0.03 to 0.10 wt%.

C is removed by decarburization during the primary recrystallization annealing process, and may be included in an amount of 0.005 wt% or less in the finally manufactured grain-oriented electrical steel sheet. More specifically, it may be included in an amount of 0.003 wt% or less. Even more specifically, it may be included in an amount of 0.0001 to 0.0030 wt%.

### Si: 1.5 to 4.5 wt%

Silicon (Si) is a basic composition of an electrical steel sheet and serves to increase the resistivity of the material to reduce core loss, that is, iron loss. When too little Si is added, the resistivity decreases, so the effect of reducing eddy current loss is weak, and the amount of fayalite formed during the decarburization process is absolutely insufficient, which may make the formation of a forsterite film unstable. Conversely, when too much Si is added, the brittleness of the steel increases, making cold rolling difficult, and as a large amount of fayalite is formed during the decarburization process, the surface quality may deteriorate. Accordingly, Si may be included in an amount of 1.5 to 4.5 wt%. More specifically, it may be included in an amount of 2.5 to 3.5 wt%.

### Mn:1.0 wt% or less

Manganese (Mn) has the effect of reducing the iron loss by increasing the specific resistance like Si. However, when a large amount of Mn is added, rather than the effect of reducing iron loss due to the increase in resistivity, the magnetic flux density is decreased after secondary recrystallization annealing by reducing the saturation magnetic flux density and weakening the grain growth inhibition force due to the formation of coarse MnS precipitates, and it affects the fayalite and silica components formed during the decarburization process, thereby hindering the formation of a good forsterite film.

Therefore, it is necessary to optimize the Mn content to form a forsterite film having excellent adhesion along with excellent magnetic flux density characteristics. However, adding too much Mn promotes the precipitation of coarse MnS, and a problem arises in that the slab must be heated to 1150°C or higher to solutionize the MnS precipitates. It may also hinder the formation of high-quality fayalite and silica during the decarburization process. Therefore, Mn may be included in an amount of 1.0 wt% or less. More specifically, Mn may be included in an amount of 0.1 to 0.5 wt%.

The slab may further include at least one of Al: 0.015 to 0.040 wt%, N: 0.0055 wt% or less, and S: 0.0055 wt% or less.

### Al: 0.015 to 0.040 wt%

Aluminum (Al) combines with N to form AlN precipitates and is a constituent element of a representative grain growth inhibitor for forming secondary recrystallization of a grain-oriented electrical steel sheet. In an embodiment of the present invention, (Al, Si, Mn)N precipitates are formed through nitriding annealing after cold rolling to ensure a grain growth inhibition effect, and particularly, by controlling the precipitation of the precipitates in the width direction of the steel sheet, the deviation of magnetic properties in the width direction is reduced. It is preferable to add 0.015 to 0.040 wt% of Al in the steelmaking step, however, when too little Al is added, the total amount of (Al, Si, Mn)N precipitates formed during the primary recrystallization and nitriding annealing processes is insignificant, and the primary recrystallized grain growth inhibition may be insufficient. Conversely, when too much Al is added, as the precipitates grow coarsely during the slab manufacturing and hot rolling processes, a coarse microstructure is formed during nitriding annealing, which may lead to unstable secondary recrystallization formation during the subsequent secondary recrystallization annealing process. Therefore, the Al content in the slab may be 0.015 to 0.040 wt%. More specifically, it may be 0.020 to 0.035 wt%.

During the secondary recrystallization annealing process, a portion of Al may be removed through purification annealing, and Al may be included in an amount of 0.040 wt% or less in the final grain-oriented electrical steel sheet. More specifically, it may be included in an amount of 0.010 to 0.040 wt%.

### N: 0.0055 wt% or less

Nitrogen (N) is an important element that reacts with aluminum (Al) to form AlN precipitates that inhibit grain growth. In a manufacturing method in which (Al, Si, Mn)N precipitates are secured through nitriding after cold rolling, it is not necessary to contain a large amount of N in the steelmaking step. However, when too little N is added, fine AlN precipitates are formed during the slab manufacturing step, making the primary recrystallized grain size fine, which allows secondary recrystallization of grains having an exact Goss orientation to easily occur. Conversely, when too much N is added, coarse AlN precipitates are formed during the slab manufacturing step, resulting in a coarse primary recrystallized microstructure, which makes the secondary recrystallization unstable. Accordingly, the N content may be limited to 0.0055 wt% or less. More specifically, N may be included in an amount of 0.0010 to 0.0050 wt%. More specifically, it may be included in an amount of 0.0030 to 0.0050 wt%.

Meanwhile, in an embodiment of the present invention, nitriding may be performed during a primary recrystallization annealing process, and then, a portion of N may be removed through purification annealing during a secondary recrystallization annealing process, and N may be included in an amount of 0.0050 wt% or less in the final grain-oriented electrical steel sheet. More specifically, it may be included in an amount of 0.001 to 0.005 wt%.

### S: 0.0055 wt% or less

Sulfur (S) generally reacts with Mn and Cu to form MnS or Cu₂S precipitates, serving as an inhibitor that suppresses the growth of primary recrystallized grains. In order to secure fine MnS precipitates, the added Mn and S must be able to be completely dissolved under slab heating conditions of 1150°C or lower to effectively function as an inhibitor. Therefore, S is preferably added within a content range that can react with the amount of Mn added. When too much S is added, complete solid solution becomes difficult, leading to the formation of coarse MnS precipitates. In addition, S is an element that easily undergoes grain boundary or surface segregation, and in particular, during a high-temperature annealing process, S diffuses to the surface of the steel sheet and causes surface segregation, which interferes with the forsterite coating reaction formed by the reaction of fayalite and silica with MgO, resulting in poor adhesion of the forsterite coating. Therefore, S may be included in an amount of 0.0055 wt% or less. Specifically, it may be included in an amount of 0.001 wt% to 0.005 wt%. More specifically, it may be included in an amount of 0.0020 to 0.0045 wt%. During the secondary recrystallization annealing process, a portion of S may be removed through purification annealing, and S may be included in an amount of 0.005 wt% or less in the final grain-oriented electrical steel sheet. More specifically, it may be included in an amount of 0.001 to 0.005 wt%.

The slab may further include one or more of Sn: 0.03 to 0.10 wt%, Sb: 0.01 to 0.05 wt%, P: 0.01 to 0.10 wt%, Cu: 0.001 to 0.1 wt%, and Cr: 0.01 to 0.50 wt%.

### Sn: 0.03 to 0.10 wt%

Tin (Sn) is an auxiliary grain growth inhibitor that is excellent in segregating at grain boundaries to hinder the movement of grain boundaries. This compensates for the weakening of the grain growth inhibition effect as AlN particles coarsen and the Si content increases. Therefore, as a result, successful formation of a {110}<001> secondary recrystallization texture may be guaranteed even with a relatively high Si content. That is, the Si content may be increased and the final thickness may be reduced without weakening the completeness of the {110}<001> secondary recrystallization structure. Therefore, further addition of Sn may advantageously affect magnetic properties. When too little Sn is added, the above-described effect may not be sufficiently obtained. Conversely, when too much Sn is added, brittleness may increase. Therefore, when Sn is further added, it may be added in an amount of 0.03 to 0.10 wt%. More specifically, it may be further added in an amount of 0.04 to 0.07 wt%.

### Sb: 0.01 to 0.05 wt%

Antimony (Sb) segregates at grain boundaries and functions to suppress excessive growth of primary recrystallized grains. Therefore, further addition of Sb may advantageously affect magnetic properties. When too little Sb is added, the above-described effect may not be sufficiently obtained. Conversely, when too much Sb is added, the size of primary recrystallized grains becomes excessively small, which lowers the secondary recrystallization initiation temperature and deteriorates magnetic properties, or the inhibitory force on grain growth becomes excessively large, potentially preventing the formation of secondary recrystallization. Therefore, when Sb is further added, it may be added in an amount of 0.01 to 0.05 wt%. More specifically, it may be further added in an amount of 0.015 to 0.035 wt%.

### P: 0.01% to 0.10 wt%

Phosphorus (P) promotes the growth of primary recrystallized grains and thus increases the secondary recrystallization temperature, thereby increasing the degree of integration of the {110}<001> orientation in the final product. When the primary recrystallized grains are too large, secondary recrystallization becomes unstable, but as long as secondary recrystallization occurs, large primary recrystallized grains are advantageous for magnetic properties in order to increase the secondary recrystallization temperature. Meanwhile, P not only reduces the iron loss of the final product by increasing the number of grains having the {110}<001> orientation in the primary recrystallized steel sheet, but also strongly develops the {111}<112> texture in the primary recrystallized sheet to improve the {110}<001> integration of the final product, thereby increasing magnetic flux density. Additionally, P segregates at grain boundaries up to a high temperature of about 1000°C during secondary recrystallization annealing, delaying the decomposition of precipitates and reinforcing the inhibitory force. Therefore, further addition of P may advantageously affect magnetic properties. When too little P is added, the above-described effect may not be sufficiently obtained. Conversely, when too much P is added, the size of primary recrystallized grains may rather decrease, making secondary recrystallization unstable and increasing brittleness, which may hinder cold rollability. Therefore, when P is further added, it may be added in an amount of 0.01 to 0.10 wt%. More specifically, it may be further added in an amount of 0.015 to 0.050 wt%.

### Cu: 0.001 to 0.1 wt%

Copper (Cu) reacts with S to form Cu₂S precipitates, serving as an inhibitor that suppresses the growth of primary recrystallized grains. When added together with Mn, it forms [MnCu]S complex precipitates, thereby affecting the size of MnS precipitates. When too little Cu is added, the formation of Cu₂S precipitates is low, and the effect as an inhibitor may be small. Conversely, when too much Cu is added, it precipitates with S in the steel before Mn, making it impossible to obtain fine MnS precipitates desired in the present invention. Therefore, it is preferable to limit the Cu content to a range of 0.001 to 0.100 wt%. More specifically, it may be included in an amount of 0.010 to 0.070 wt%.

### Cr: 0.01 to 0.50 wt%

Chromium (Cr) is an element that reacts most rapidly with oxygen to form Cr₂O₃ on the surface of the steel sheet. Through this, carbon components in the steel rapidly diffuse to the surface of the steel sheet and react with oxygen in an atmospheric gas to form CO gas, thereby promoting decarburization. When too little Cr is added, the aforementioned effects may not be sufficiently obtained. When too much Cr is added, it may not significantly affect the formation of the surface oxide layer. Therefore, the amount of Cr added is limited to 0.01 to 0.50 wt%. More specifically, it may be included in an amount of 0.03 to 0.30 wt%.

The balance includes iron (Fe). Inevitable impurities may also be included. Inevitable impurities refer to impurities that are inevitably mixed in during the steelmaking process and the manufacturing process of the grain-oriented electrical steel sheet. Since the inevitable impurities are widely known, a detailed description thereof is omitted. In the embodiment of the present invention, the addition of elements other than the above-described alloy components is not excluded, and various elements may be included within a range that does not hinder the technical concept of the present invention. When the additional elements are further included, they replace the balance of Fe. For example, it is possible within the component range of the present invention to contain at least one component among Ni, Mo, Zr, Bi, Pb, As, Ge, and Ga in the steel.

Returning to the description of the manufacturing process, the slab is heated to 1150°C or lower. The slab may be manufactured by a blooming method, a continuous casting method, thin slab casting, or strip casting, and in the case of the blooming method, continuous casting, and thin slab casting, the slab is manufactured, and then slab heating and hot rolling are performed in subsequent processes.

Since slab heating is basically based on a method for manufacturing a grain-oriented electrical steel sheet in which (Al, Si, Mn)N precipitates are secured through decarburization and nitriding annealing after cold rolling for AlN-based precipitates, which are primary grain growth inhibitors required for secondary recrystallization of the Goss orientation, hot rolling may be performed after heating the slab to 1150°C or lower. In the slab heating and hot rolling processes, the amounts of Mn and S added in the steelmaking step are limited so that the solid solution temperature of MnS precipitates formed by the reaction of the added Mn and S is 1150°C or lower, in order to successfully form fine MnS as an auxiliary grain growth inhibitor.

When the slab is heated at an excessively high temperature, AlN precipitates formed during the solidification process of the slab manufacturing step are excessively dissolved during the slab heating step and then finely precipitate during the subsequent hot rolling process, which makes the grain size fine during hot rolling and decarburization and hinders the formation of secondary recrystallization of grains having an exact Goss orientation. Although the slab heating temperature is preferably as low as possible within a range in which MnS precipitated according to the added Mn and S contents may be completely dissolved, specifically, the slab may be heated at 1000°C to 1150°C in consideration of the hot rolling load.

Next, the slab is hot-rolled to manufacture the hot-rolled sheet.

Hot rolling is performed to a thickness of 1.0 to 3.5 mm, and considering the rolling load, rolling may be completed at a temperature of 850°C or higher, cooled to a temperature of 600°C or lower, and then coiled.

The hot-rolled steel sheets may then be rolled smoothly to the final product thickness in the subsequent cold rolling process by recrystallizing the hot-rolled deformation structure in the hot-rolled sheet annealing process. In general, the hot-rolled sheet annealing temperature is preferably maintained for a predetermined time by heating to a temperature of 800°C or higher for recrystallization, and annealing by heating at a plurality of temperatures is also possible to control the distribution and size of precipitates. The hot-rolled sheet annealing may be omitted as necessary.

Next, the hot-rolled sheet is cold-rolled to manufacture a cold-rolled sheet.

The hot-rolled sheet is subjected to pickling to remove an oxide layer on a surface of the steel sheet, and then cold-rolled. The cold rolling is a process of reducing the thickness of the steel sheet to a final product thickness, and is performed to the final product thickness through one cold rolling or one or more cold rollings including intermediate annealing. In this case, since the cold rolling reduction ratio enhances the degree of integration of the Goss orientation and affects the improvement of magnetic flux density after final secondary recrystallization annealing, the cold rolling may be performed at a reduction ratio of at least 80%. When the cold rolling reduction ratio is too low, the degree of integration of the Goss orientation decreases, resulting in a low magnetic flux density in the final product. Therefore, the cold rolling reduction ratio is set to at least 80%, and the maximum reduction ratio may be performed up to a maximum possible range according to the rolling capacity of the rolling equipment. In addition, when the plate temperature of the cold-rolled steel sheet is raised to 50°C or higher during the cold rolling process, a large number of secondary recrystallization nuclei of the Goss orientation are generated due to work hardening by solid-soluted carbon, thereby improving the magnetic flux density of the final product. When the temperature of the cold-rolled steel sheet is too low, the generation of secondary recrystallization nuclei of the Goss orientation is minimal, and conversely, when it exceeds 300°C, the work-hardening effect by solid-soluted carbon is weakened, thereby weakening the generation of secondary recrystallization nuclei of the Goss orientation. Accordingly, in the cold rolling process, the steel sheet may be maintained in a temperature range of 50 to 300°C at least once during an intermediate rolling step. After the cold rolling, the thickness of the cold-rolled sheet may be 0.10 to 0.35 mm.

Next, the cold-rolled sheet is subjected to primary recrystallization annealing.

A primary recrystallization annealing temperature may be 800 to 950°C. When the annealing temperature of the steel sheet is too low, decarburization and nitriding take a long time, and it is difficult to properly form a metal oxide layer. When the annealing temperature is too high, primary recrystallized grains grow coarsely, resulting in a decrease in the driving force for grain growth, which may prevent the formation of stable secondary recrystallization. The annealing time is not a significant issue in achieving the effects of the present invention, but the process may be performed for 5 minutes or less in consideration of productivity.

Decarburization and nitriding may be performed during the primary recrystallization annealing process. Decarburization and nitriding may be performed by decarburization followed by nitriding, nitriding followed by decarburization, or nitriding and decarburization simultaneously.

Nitriding may be performed by introducing a nitriding gas as an atmosphere gas during the primary recrystallization annealing process. The nitriding gas may include ammonia gas. By introducing nitrogen ions into the steel sheet through nitriding, it may assist in precipitating inhibitors such as (Al, Si, Mn)N and AlN.

After nitriding, the nitrogen content in the steel sheet may be 0.0120 to 0.0280 wt%. When the nitrogen content is too low, it is difficult to sufficiently function as an inhibitor until secondary recrystallization starts. When the nitrogen content is too high, excessive formation of nitrides not only inhibits normal secondary recrystallization formation but also may form film defects such as bare spots due to N₂ gas decomposed during a purification process after the secondary recrystallization formation. More specifically, the nitrogen content in the steel sheet may be 0.0150 to 0.0250 wt%.

Any gas capable of penetrating nitrogen into the steel sheet may be used as the nitriding gas without limitation. Specifically, it may be ammonia or nitrogen. Nitriding is possible through heat treatment in an ammonia atmosphere, or through laser or plasma treatment in a nitrogen atmosphere.

The primary recrystallization annealing step may be performed in an atmosphere having an oxidation ability (PH₂O/PH₂) of 0.45 to 0.80, thereby performing decarburization to discharge carbon in the steel sheet to the outside. When the oxidation ability is low, it is difficult for oxidation or decarburization to sufficiently occur. When the oxidation ability is too high, FeO is rapidly generated at the outermost surface of the oxide film, which may result in an unstable oxide. More specifically, the oxidation ability may be 0.48 to 0.75.

After the primary recrystallization annealing step, an oxide layer having an average thickness of 1.6 to 3.2 µm may exist on the surface of the steel sheet. Due to decarburization during the primary recrystallization annealing, an oxide layer exists near the surface of the steel sheet. The oxide layer refers to a portion from the surface of the steel sheet to a point where the oxygen content changes rapidly by measuring the oxygen content. When the thickness of the oxide layer is too thin, magnetic non-uniformity increases. When the thickness of the oxide layer is too thick, a metal oxide layer is formed thickly, and the thickness of the base material is relatively reduced, which may result in poor magnetism.

After the primary recrystallization annealing step and before the secondary recrystallization annealing step, a step of applying an annealing separator may be further included. In an embodiment of the present invention, by using an annealing separator including a low-melting-point additive, the grain size of forsterite particles may be uniformly formed. The low-melting-point additive refers to an additive having a melting point of 900°C or lower. Such a low-melting-point additive prevents additional oxidation and additional nitriding of the steel sheet during the secondary recrystallization annealing process and allows the grain size of forsterite particles to be uniformly formed in a width direction of the steel sheet. More specifically, the low-melting-point additive may have a melting point of 750°C.

Specifically, the additive may include one or more of hydroxide, carbonate, amide compound, chromate, oxide, antimony compound, chlorine compound, chloride oxide, sulfur compound, nitrogen compound, bromide, bromate, telluric acid, vanadate, borate, and phosphorus compound.

In addition, the additive may include one or more of Li, F, Na, K, Cu, Ba, Br, Mg, Ca, Zn, Sr, Cd, B, Al, Y, Ga, In, Tl, Ti, Sn, P, Nb, Sb, Bi, S, Cr, Te, V, W, Fe, Mn, Co, and Ni.

As an example of the additive, it may include one or more of SrCl₂, Sb₂O₃, FeBr₂, CuCl, MnCl₂, B₂O₃, NiSO₄, CoSO₄, CuBr, and SnS.

The additive may be included in an amount of 0.01 to 0.50 parts by weight based on 100 parts by weight of MgO. "Parts by weight" refers to a relative weight ratio of each component and is measured as a solid content after all moisture is removed. When the amount of the low-melting-point additive added is too small, it is difficult to sufficiently obtain the effect of forming a low-melting-point glassy layer or promoting the formation of a forsterite film. When the amount of the low-melting-point additive added is too large, local melting defects in pinholes may occur. More specifically, the low-melting-point additive may be included in an amount of 0.05 to 0.30 parts by weight.

The annealing separator includes 100 parts by weight of MgO. When MgO exists in water, it also exists in the form of Mg(OH)₂, and in an embodiment of the present invention, when MgO is mentioned, it is interpreted to mean Mg(OH)2 together with MgO, and the content of MgO can be understood as the total amount of MgO and Mg(OH)₂.

Hydration moisture of MgO may be 1.2 to 2.5 wt%. The hydration moisture also helps to ensure that the grain size of forsterite particles is uniformly formed in the width direction of the steel sheet together with the aforementioned low-melting-point additive. When the hydration moisture is too low, the moisture for making the atmosphere between the steel sheets semi-wet is insufficient, so that the forsterite film thickness at the center portion in the width direction becomes thin, and forsterite particles may be non-uniformly formed. On the other hand, when the hydration moisture is too high, the moisture content between the steel sheets becomes excessive, and oxidation at the edge portion becomes excessive, which may increase oxidative defects. More specifically, the hydration moisture of MgO may be 1.5 to 2.3 wt%. The hydration moisture of MgO refers to the total amount of moisture remaining in the steel sheet and moisture remaining in the state of Mg(OH)2 when MgO powder is mixed with pure water at about 12°C or lower, applied to the steel sheet in a slurry state, and then dried. The hydration moisture of MgO may be defined as the difference between the weight of a small amount of MgO collected from the dried steel sheet and the weight of the MgO after heat treatment at 1000°C for 1 hour.

The annealing separator may further include ceramic powders such as TiO₂, SiO₂, and Al₂O₃ in addition to MgO and the low-melting-point additive. When one or more of TiO₂, SiO₂, and Al₂O₃ are further added, it may be included in an amount of 1 to 10 parts by weight based on 100 parts by weight of MgO.

Next, the primary recrystallization annealed steel sheet is subjected to secondary recrystallization annealing.

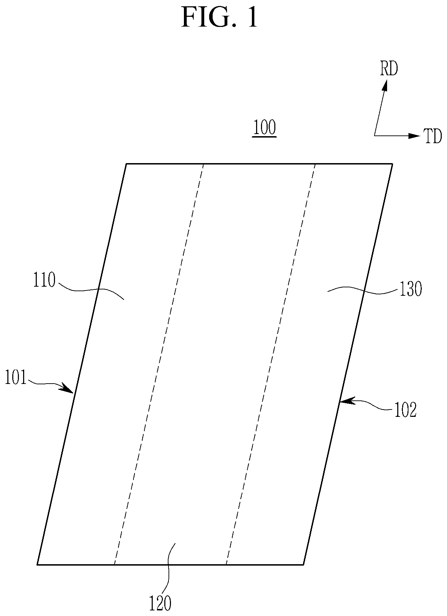

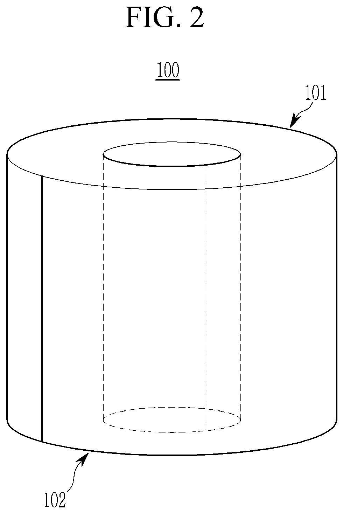

During the secondary recrystallization annealing, the steel sheet is wound into a coil shape and annealed for a long time. FIG. 1 schematically illustrates a steel sheet according to an embodiment of the present invention, and FIG. 2 schematically illustrates a steel sheet wound in a coil shape.

One end portion 101 in FIG. 1 corresponds to an upper end portion 101 of the coil, and the other end portion 102 in FIG. 2 corresponds to a lower end portion 102 of the coil. Since an edge portion 110 adjacent to the upper end portion 101 and the lower end portion 102 of the coil is in direct contact with air in an external atmosphere, oxidation becomes excessive compared to an internal center portion 120, which results in non-uniform grain sizes of forsterite particles between the edge portion 110 and the center portion 120.

In an embodiment of the present invention, by varying atmosphere conditions according to a thermal history of the steel sheet during the secondary recrystallization annealing process, forsterite particles are uniformly formed between the edge portion 110 and the center portion 120.

Specifically, the secondary recrystallization annealing step includes a first heating step in which the steel sheet temperature is 650°C to 900°C, a second heating step in which the steel sheet temperature is above 900°C to a soaking temperature or lower, and a soaking step, wherein atmosphere conditions in respective steps are controlled.

Hereinafter, respective steps will be specifically described.

First, the steel sheet is heated through the first heating step in which the steel sheet temperature is 650°C to 900°C. In the first heating step, the oxide layer on the surface of the steel sheet formed during the primary recrystallization annealing process is prepared in a state suitable for reacting with MgO. The first heating step is performed in an atmosphere having an oxidation ability (PH₂O/PH₂) of 0.05 to 0.40. When the oxidation ability is too low, the oxide layer may not properly react with MgO in a subsequent step, and a reduction reaction of Fe-based oxides occurs, making it difficult for forsterite particles to sufficiently grow, especially in the center portion 120. Conversely, when the oxidation ability is too high, olivine and pyroxene phase oxides increase in the surface oxide layer of the edge portion 110, which interferes with the reaction with MgO and makes it difficult for forsterite particles to sufficiently grow. More specifically, the first heating step may be performed in an atmosphere having an oxidation ability (PH₂O/PH₂) of 0.10 to 0.25. The oxidation ability may have a gradient that decreases as the temperature rises, and the oxidation ability of the first heating step means an average oxidation ability over the entire time of the first heating step.

The first heating step may include 10 to 50 vol% of N₂ and 50 to 90 vol% of H₂. When there is too little N₂, the inhibitor decomposes too rapidly, which may cause degradation of magnetic properties. When there is too much N₂, it may become difficult to uniformly control oxidation ability within the steel sheet, and additional nitriding may occur in the steel sheet, which may affect the forsterite film and magnetic properties. More specifically, the first heating step may include 20 to 40 vol% of N₂ and 60 to 80 vol% of H₂.

The first heating step is operated at a heating rate of 5°C/hr to 90°C/hr. When the heating rate of the first heating stet is too high, the temperature deviation within the wound coil becomes excessive, and there is a strain on the equipment, so this should be avoided, and when the heating rate of the first heating step is performed too low, a problem with productivity may occur. More specifically, the first heating step may be 10°C/hr to 75°C/hr.

After the first heating step, 2 to 15 wt% of forsterite may be included in a thickness range of 10 µm from the surface of the steel sheet toward the inside of the steel sheet. By appropriately controlling the aforementioned oxidation ability (PH₂O/PH₂), forsterite is properly formed. When too little forsterite is present, it becomes difficult for forsterite grains in the center portion 120 to sufficiently grow. When too much forsterite is present, it becomes difficult for forsterite grains in the edge portion 110 to sufficiently grow. The total amount of forsterite can be measured and analyzed using an X-ray quantitative analyzer.

Next, the steel sheet is heated through the second heating step in which the steel sheet temperature is higher than 900°C and less than or equal to a soaking temperature. In the second heating step, the oxide layer on the surface of the steel sheet substantially starts to react with MgO, and an inhibitor removal reaction occurs. The second heating step is performed in an atmosphere having an oxidation ability (PH₂O/PH₂) of 0.03 or less. When the oxidation ability (PH₂O/PH₂) is too high, Olivine and Pyroxene phase oxides in the surface oxide layer of the edge portion 110 increase, which interferes with the reaction with MgO and makes it difficult for forsterite grains to grow sufficiently. More specifically, the second heating step may have an oxidation ability (PH₂O/PH₂) of 0.01 to 0.03

The second heating step may include 50 vol% or less of N₂ and 50 vol% or more of H₂. When there is too much N₂, it may become difficult to uniformly control oxidation ability within the steel sheet, and additional nitriding may occur in the steel sheet, which may affect the forsterite film and magnetic properties. More specifically, the second heating step may include 30 vol% or less of N₂ and 70 vol% or more of H₂. More specifically, the second heating step may include 10 to 30 vol% of N₂ and 70 to 90 vol% of H₂.

The second heating step is performed at 5°C/hr to 30°C/hr. When the heating rate of the second heating step is too high, a temperature deviation may occur within the wound coil, which may cause deviations in not only the magnetic properties but also the surface properties, and thus, this is limited, and conversely, when the heating rate of the second heating step is too low, productivity may decrease, and thus, this is limited. More specifically, the heating rate of the second heating step may be 8°C/hr to 25°C/hr.

After the second heating step, 85 to 100 wt% of forsterite is included in a thickness range of 10 µm from the surface toward the inside of the steel sheet. By appropriately controlling the aforementioned oxidation ability (PH2O/PH2), forsterite is properly formed.

Next, a soaking step of soaking the steel sheet at a soaking temperature is included. The soaking temperature may be 1000°C or higher, specifically 1170 to 1220°C. In the soaking step, the formation of the forsterite film is completed, secondary recrystallization grows, and the inhibitor is removed. During the soaking step, the oxidation ability (PH₂O/PH₂) may be maintained at less than 0.03. In addition, by including 99 vol% or more of H₂, inhibitors and impurities may be smoothly removed. The soaking step may be performed for 1 to 25 hours.

After the secondary recrystallization annealing, the unreacted annealing separator is removed by water washing, followed by pickling, and then, after an insulation film agent is applied, a heat flattening treatment may be performed, which serves as annealing for the insulation film, shape correction, and stress relief annealing.

The grain-oriented electrical steel sheet according to an embodiment of the present invention includes, in wt/%, C: 0.005% or less (excluding 0%), Si: 1.5% to 4.5%, Mn: 1.0% or less, and the balance of Fe and other inevitably mixed impurities.

The steel components of the grain-oriented electrical steel sheet have been described in the steel components of the slab in the method for manufacturing the grain-oriented electrical steel sheet described above, so redundant descriptions will be omitted.

As described above, in the method for manufacturing the grain-oriented electrical steel sheet, by differently applying the oxidation ability during the temperature-raising process in the secondary recrystallization annealing process, the deviation of the average grain size of forsterite grains in the width direction of the steel sheet is reduced.

Specifically, a forsterite layer exists on one or both surfaces of the steel sheet substrate, and a ratio (P₂/P₁) of an average grain size (P₂) of forsterite grains present in the forsterite layer of the center portion 120 extending from more than 30% to less than 70% of the entire width of the steel sheet from the one end portion to an average grain size (P₁) of forsterite grains present in the forsterite layer of the edge portion 110, the edge portion extending from one end portion in a width direction of the steel sheet to 30% of an entire width of the steel sheet, and from 70% of the entire width of the steel sheet from the one end portion to an opposite end portion, is 0.8 to 1.2.

The forsterite grains refer to crystalline oxide grains mainly composed of Mg₂SiO₄ formed during secondary recrystallization annealing in the present invention. The average grain size of the forsterite grains may be obtained by collecting at least 15 samples in the cross-section in the TD direction for the corresponding areas of the edge portion 110 and the center portion 120 and measuring the grain size of the forsterite grains within the corresponding forsterite layer. More specifically, the grain size of the forsterite grains may be measured by collecting the corresponding sample, processing the cross-section using a Focused Ion Beam from Carl Zeiss, and measuring the forsterite film using a Transmission Electron Microscope from JEOL. Thereafter, the forsterite grains may be measured an Image Analyzer from Leica. In addition, the present invention does not limit the method for measuring forsterite grains.

When the average grain size ratio (P₂/P₁) of the forsterite grains is too small or too large, it means that the grain size is not uniform between the edge portion 110 and the center portion 120, which also affects the grain size of the secondary recrystallization under the forsterite layer, causing the secondary recrystallization grains to form non-uniformly and resulting in magnetic deviation in the width direction. Specifically, the average grain size ratio (P₂/P₁) may be 0.85 to 1.15.

As described above, since the average grain size ratio (P₂/P₁) of forsterite grains is uniform in an embodiment of the present invention, the grain size of the secondary recrystallization may also be formed uniformly between the edge portion 110 and the center portion 120. Specifically, the ratio (R₂/R₁) of an average grain size (R₂) of the secondary recrystallization present at the center portion 120 extending from one end portion of the steel sheet to more than 30% but less than 70% of the total width of the steel sheet to an average grain size (R₁) of the secondary recrystallization present at the edge portion 110 extending from one end portion of the steel sheet to 30% of the total width of the steel sheet and from 70% of the total width of the steel sheet to the other end portion may be 0.7 to 1.2. More specifically, the average grain size ratio (R₂/R₁) of the secondary recrystallization may be 0.80 to 1.10.

The average grain size of forsterite grains in the forsterite layer of the edge portion 110 is 0.3 to 2.0 µm, and the average grain size of forsterite grains in the forsterite layer of the center portion 120 is 0.3 to 2.0 µm.

The grain-oriented electrical steel sheet according to an embodiment of the present invention has excellent iron loss and magnetic flux density, and simultaneously, the deviations in iron loss and magnetic flux density in the width direction are very small.

The grain-oriented electrical steel sheet according to an embodiment of the present invention may have a magnetic flux density (B₈) of 1.90 T or more and an iron loss (W_{17/50}) of 0.90 W/kg or less. In this case, the magnetic flux density (B₈) is a magnetic flux density (Tesla) induced under a magnetic field of 800 A/m, and the iron loss (W_{17/50}) is an iron loss (W/kg) induced in 1.7 Tesla and 50 Hz conditions. More specifically, the magnetic flux density (B₈) may be 1.91 T to 1.95 T, and the iron loss (W_{17/50}) may be 0.75 to 0.85 W/kg.

In an embodiment of the present invention, the grain-oriented electrical steel sheet may have a ratio of iron loss (W_{17/50}) of the center portion to the edge portion (center portion/edge portion) of 0.98 to 1.2 when the width is 1050 mm or more.

In addition, the ratio of the magnetic flux density (B8) of the center portion to the edge portion (center portion/edge portion) may be 0.98 to 1.00. The deviation of iron loss and magnetic flux density may be obtained through the average values of 10 or more samples collected from each portion.

In addition, the adhesion of the forsterite film is excellent. The adhesion may be measured as the minimum arc diameter at which no film peeling occurs when bent 180° in contact with an arc of a specific diameter. Specifically, the adhesion of the forsterite film may be 20 mmΦ or less.

Hereinafter, a specific example of the present invention will be described. However, the following example is only a specific example of the present invention, and the present invention is not limited to the following example.

Experimental Example 1

A slab including, in wt%, C: 0.060%, Si: 3.3%, Mn: 0.090%, Al: 0.028%, Sb: 0.04%, Cu: 0.02%, Sn: 0.05%, and the balance of Fe and inevitable impurities, was prepared, and the slab was heated to a temperature of 1150°C, hot-rolled to a thickness of 2.3 mm, and then quenched at 600 °C and coiled. The hot-rolled sheet was subjected to hot-rolled sheet annealing at 1080°C, pickled, and then cold-rolled once to a thickness of 0.20 mm. For the cold-rolled sheet, simultaneous decarbonization and nitriding annealing heat treatment was performed at 850°C in a humid atmosphere of 50 v% hydrogen and 50 v% nitrogen and an ammonia mixed gas atmosphere for 180 seconds so that the carbon content became 30 ppm or less and the total nitrogen content became 200 ppm or more. A slurry containing an annealing separator containing 100 parts by weight of MgO, 5 parts by weight of TiO₂, 0.15 parts by weight of SrCl₂, 0.10 parts by weight of Sb₂O₃, and 0.05 parts by weight of FeBr₂ with a hydration moisture content of 1.75 wt%, stirred at a water temperature of 8°C, was applied to the steel sheet at a rate of 6.0 g/m₂ per surface based on the weight after drying, and then dried and wound into a coil.

After the first heating step (steel sheet temperature of 900°C) and the second heating step (steel sheet temperature of 1200°C), the steel sheets were extracted, and the results of quantifying forsterite (Mg₂SiO₄) using XRD are summarized in Table 1 below.

Subsequently, the secondary recrystallization annealing was performed by heating and soaking at 1200°C in 100v% H₂ for 6 hours in an atmosphere summarized in Table 1 below, and a solution containing Al phosphate and colloidal silica as main components was applied as an insulating film component in a continuous line, followed by annealing at 850°C.

With respect to the finally manufactured grain-oriented electrical steel sheet, 20 specimens each were collected by shearing into an Epstein specimen size [60 mm (width) X 300 mm (length)] at each of the edge portion and the center portion, and then the average grain size of forsterite, secondary recrystallization grain size, magnetic flux density (B₈), and iron loss (W_{17/50}) were measured and summarized in Table 2 and Table 3 below.

The average grain size of forsterite was measured by processing a cross-section using a Focused Ion Beam (Carl Zeiss), measuring the forsterite film with a Transmission Electron Microscope (JEOL), and then using an Image Analyzer (Leica).

The secondary recrystallization grain size was measured for the specimens subjected to the secondary recrystallization annealing by completely removing the insulation coating and the forsterite film with hydrochloric acid and then using a method based on the ASTM (American Society for Testing and Materials) grain size test method.

The evaluation results of the adhesion of the forsterite film are shown in Table 3. The adhesion was measured as the minimum arc diameter that does not cause film peeling when the steel sheet is bent by 180° while being in contact with an arc having a diameter of 10 to 50 mm.

Deviations in core loss and magnetic flux density were calculated based on a ratio between a center portion and an edge portion.

**(Table 1)**

| | First heating step | | | | Second heating step | | | |
|---|---|---|---|---|---|---|---|---|
| | Oxidizing capacity (P_{H2O}/ P_{H2}) | Nitrogen (volume%) | Heating rate (°C/hr) | Forsterite amount (wt%) | Oxidizing capacity (P_{H2O}/ P_{H2}) | Nitrogen (volume%) | Heating rate (°C/hr) | Forsterite amount (wt%) |
| Example 1 | 0.15 | 25 | 15 | 5.2 | 0.02 | 25 | 20 | 98 |
| Example 2 | 0.10 | 15 | 20 | 2.8 | 0.02 | 25 | 20 | 94 |
| Example 3 | 0.25 | 25 | 20 | 7.3 | 0.02 | 25 | 20 | 96 |
| Example 4 | 0.05 | 25 | 10 | 3.4 | 0.02 | 25 | 20 | 88 |
| Examp le 5 | 0.35 | 40 | 15 | 12.5 | 0.02 | 25 | 20 | 94 |
| Comp arative Examp le 1 | 0.01 | 25 | 20 | 0.1 | 0.02 | 25 | 20 | 81 |
| Comp arative Examp le 2 | 0.50 | 75 | 25 | 22.7 | 0.02 | 25 | 20 | 95 |
| Comparative Example 3 | 0.20 | 25 | 100 | 0.1 | 0.02 | 25 | 20 | 83 |
| Example 6 | 0.15 | 25 | 75 | 5.2 | 0.01 | 25 | 15 | 94 |
| Example 7 | 0.15 | 25 | 75 | 5.2 | 0.03 | 25 | 15 | 96 |
| Example 8 | 0.15 | 25 | 75 | 5.2 | 0.02 | 25 | 25 | 89 |
| Example 9 | 0.25 | 25 | 75 | 7.3 | 0.02 | 25 | 10 | 98 |
| Example 10 | 0.25 | 25 | 75 | 7.3 | 0.02 | 40 | 10 | 95 |
| Example 11 | 0.25 | 25 | 75 | 7.3 | 0.03 | 50 | 25 | 93 |
| Comparative Example 4 | 0.15 | 25 | 75 | 5.2 | 0.30 | 25 | 15 | 90 |
| Comparative Example 5 | 0.15 | 25 | 75 | 5.2 | 0.03 | 25 | 100 | 76 |
| Comparative Example 6 | 0.25 | 25 | 75 | 7.3 | 0.03 | 75 | 20 | 95 |

**(Table 2)**

| | Forsterite average grain size | | | Average grain size after secondary recrystallization | | |
|---|---|---|---|---|---|---|
| | Edge portion (P₁, µm) | Center portion (P₂, µm) | P₂/P₁ | Edge portion (R₁, cm) | Center portion (R₂, cm) | R₂/R₁ |
| Example 1 | 0.68 | 0.65 | 0.96 | 1.89 | 1.68 | 0.89 |
| Example 2 | 0.58 | 0.53 | 1.09 | 2.18 | 2.02 | 0.93 |
| Example 3 | 0.76 | 0.88 | 1.16 | 1.58 | 1.54 | 0.97 |
| Example 4 | 0.44 | 0.38 | 0.86 | 2.43 | 2.2 | 0.91 |
| Example 5 | 1.05 | 0.95 | 0.91 | 2.05 | 1.83 | 0.89 |
| Comparative Example 1 | 0.15 | 0.22 | 1.47 | 5.8 | 3.94 | 0.68 |
| Comparative Example 2 | 2.52 | 1.85 | 0.73 | 0.04 | 0.04 | 0.61 |
| Comparative Example 3 | 0.13 | 0.16 | 1.23 | 4.85 | 3.29 | 0.68 |
| Example 6 | 0.68 | 0.62 | 0.91 | 2.74 | 2.62 | 0.96 |
| Example 7 | 0.83 | 0.75 | 0.90 | 1.66 | 1.48 | 0.89 |
| Example 8 | 0.56 | 0.45 | 0.82 | 3.08 | 2.44 | 0.79 |
| Example 9 | 0.80 | 0.78 | 0.98 | 1.73 | 1.48 | 0.86 |
| Example 10 | 0.94 | 0.81 | 0.86 | 2.67 | 2.26 | 0.85 |
| Example 11 | 1.10 | 0.98 | 0.89 | 2.83 | 2.16 | 0.76 |
| Comparative Example 4 | 3.45 | 2.52 | 0.73 | 6.87 | 5.42 | 0.79 |
| Comparative Example 5 | 0.52 | 0.27 | 0.52 | 3.02 | 1.21 | 0.40 |
| Comparative Example 6 | 1.34 | 0.84 | 0.63 | 7.66 | 6.32 | 0.83 |

**(Table 3)**

| | Iron loss (W17/50, W/kg) | | | Magnetic flux density (B8, T) | | | Adhesion (mm) |
|---|---|---|---|---|---|---|---|
| | Edge portion | Center portion | Deviation | Edge portion | Center portion | Deviation | |
| Example 1 | 0.64 | 0.65 | 1.02 | 1.93 | 1.93 | 1.00 | 15 |
| Example 2 | 0.63 | 0.65 | 1.03 | 1.94 | 1.93 | 0.99 | 18 |
| Example 3 | 0.66 | 0.67 | 1.02 | 1.93 | 1.92 | 0.99 | 15 |
| Example 4 | 0.63 | 0.65 | 1.03 | 1.94 | 1.93 | 0.99 | 17 |
| Example 5 | 0.70 | 0.69 | 0.99 | 1.91 | 1.91 | 1.00 | 20 |
| Comparative Example 1 | 0.92 | 0.88 | 0.96 | 1.88 | 1.89 | 1.01 | 45 |
| Comparative Example 2 | 1.05 | 1.04 | 0.99 | 1.86 | 1.86 | 1.00 | 40 |
| Comparative Example 3 | 0.92 | 0.90 | 0.98 | 1.87 | 1.87 | 1.00 | 35 |
| Example 6 | 0.75 | 1.02 | 1.36 | 1.90 | 1.85 | 0.97 | 45 |
| Example 7 | 0.72 | 0.82 | 1.14 | 1.92 | 1.90 | 0.99 | 32 |
| Example 8 | 0.78 | 0.93 | 1.19 | 1.91 | 1.87 | 0.98 | 45 |
| Example 9 | 0.64 | 0.64 | 1.00 | 1.93 | 1.93 | 1.00 | 15 |
| Example 10 | 0.68 | 0.69 | 1.01 | 1.91 | 1.91 | 1.00 | 20 |
| Example 11 | 0.71 | 0.70 | 0.99 | 1.91 | 1.90 | 0.99 | 20 |
| Comparative Example 4 | 0.88 | 0.91 | 1.03 | 1.89 | 1.87 | 0.99 | 32 |
| Comparative Example 5 | 0.88 | 0.85 | 0.97 | 1.88 | 1.89 | 1.01 | 35 |
| Comparative Example 6 | 0.86 | 0.87 | 1.01 | 1.87 | 1.87 | 1.00 | 37 |

As can be seen in Table 1 to Table 3, when the atmosphere conditions during the heating and soaking in the secondary recrystallization annealing process are appropriately controlled, it can be confirmed that the average grain size of forsterite is uniformly formed, magnetic properties are excellent, and the magnetic deviation in the width direction is reduced.

On the other hand, when the atmosphere conditions during the heating and soaking are not appropriately controlled, it can be confirmed that the average grain size of forsterite is non-uniformly formed, and the magnetic deviation in the width direction is large.

### Experimental Example 2

The same procedure as in Example 1 was performed, but the annealing separator was changed as shown in Table 4. With respect to the finally manufactured grain oriented electrical steel sheet, 20 specimens each were collected by shearing into an Epstein specimen size [60 mm (width) X 300 mm (length)] at each of the edge portion and the center portion, and then the average grain size of forsterite, secondary recrystallization grain size, magnetic flux density (B₈), and iron loss (W_{17/50}) were measured and summarized in Table 5 and Table 6 below.

**(Table 4)**

| | Hydration moisture (wt%) | Low-melting-point additive (parts by weight) | | | |
|---|---|---|---|---|---|
| | | Additive-1 | Additive-2 | Additive-3 | Additive-4 |
| Example 12 | 1.75 | SrCl₂ 0.15 | Sb₂O₃ 0.10 | FeBr₂ 0.05 | - |
| Example 13 | 1.75 | Sb₂O₃ 0.15 | CuCl 0.05 | - | - |
| Example 14 | 1.80 | MnCl₂ 0.05 | B₂O₃ 0.05 | NiSO₄ 0.15 | CoSO₄ 0.05 |
| Example 15 | 1.46 | MnCl₂ 0.10 | CoSO₄ 0.05 | CuBr 0.15 | - |
| Example 16 | 2.31 | SrCl₂ 0.10 | Sb₂O₃ 0.20 | SnS 0.15 | - |
| Example 17 | 1.82 | SrCl₂ 0.10 | CoSO₄ 0.20 | NiSO₄ 0.05 | - |
| Comparative Example 7 | 1.75 | - | - | - | - |
| Comparative Example 8 | 1.91 | MnCl₂ 0.15 | B₂O₃ 0.30 | NiSO₄ 0.25 | - |
| Comparative Example 9 | 1.13 | SrCl₂ 0.15 | Sb₂O₃ 0.10 | - | - |
| Comparative Example 10 | 2.95 | SrCl₂ 0.15 | Sb₂O₃ 0.10 | - | - |

**(Table 5)**

| | Forsterite average grain size | | | Average grain size after secondary recrystallization | | |
|---|---|---|---|---|---|---|
| | Edge portion (P₁, µm) | Center portion (P₂,µm) | P₂/P₁ | Edge portion (R₁, cm) | Center portion (R₂, cm) | R₂/R₁ |
| Example 12 | 0.66 | 0.60 | 0.91 | 2.32 | 1.80 | 0.78 |
| Example 13 | 0.61 | 0.52 | 0.85 | 1.56 | 1.52 | 0.97 |
| Example 14 | 0.52 | 0.58 | 1.12 | 1.28 | 1.12 | 0.88 |
| Example 15 | 0.54 | 0.55 | 1.02 | 1.36 | 1.40 | 1.03 |
| Example 16 | 0.65 | 0.73 | 1.12 | 2.64 | 2.08 | 0.79 |
| Example 17 | 0.73 | 0.81 | 1.11 | 2.20 | 1.76 | 0.80 |
| Comparative Example 7 | 0.46 | 0.29 | 0.63 | 6.08 | 3.52 | 0.58 |
| Comparative Example 8 | 0.58 | 0.92 | 1.59 | 5.00 | 2.68 | 0.54 |
| Comparative Example 9 | 0.38 | 0.23 | 0.61 | 6.68 | 4.08 | 0.61 |
| Comparative Example 10 | 1.52 | 0.99 | 0.65 | 3.64 | 5.00 | 1.37 |

**(Table 6)**

| | Iron loss (W17/50, W/kg) | | | Magnetic flux density (B8, T) | | | Adhesion (mm) |
|---|---|---|---|---|---|---|---|
| | Edge portion (P₁) | Center portion (P₂) | Deviation (P₂/P₁) | Edge portion (P₁) | Center portion (P₂) | Deviation (P₂/P₁) | |
| Example 12 | 0.65 | 0.67 | 1.03 | 1.93 | 1.92 | 0.99 | 16 |
| Example 13 | 0.67 | 0.68 | 1.02 | 1.93 | 1.92 | 0.99 | 18 |
| Example 14 | 0.63 | 0.65 | 1.03 | 1.94 | 1.93 | 1.00 | 15 |
| Example 15 | 0.65 | 0.66 | 1.02 | 1.93 | 1.92 | 0.99 | 15 |
| Example 16 | 0.66 | 0.69 | 1.05 | 1.92 | 1.91 | 1.00 | 17 |
| Example 17 | 0.65 | 0.67 | 1.03 | 1.93 | 1.93 | 1.00 | 17 |
| Comparative Example 7 | 0.80 | 0.81 | 1.01 | 1.91 | 1.88 | 0.98 | 40 |
| Comparative Example 8 | 0.75 | 1.02 | 1.36 | 1.90 | 1.85 | 0.97 | 45 |
| Comparative Example 9 | 0.72 | 0.82 | 1.14 | 1.92 | 1.90 | 0.99 | 32 |
| Comparative Example 10 | 0.78 | 0.93 | 1.19 | 1.91 | 1.87 | 0.98 | 45 |

As can be confirmed in Table 4 to FIG. 6, it can be seen that the addition range of the low-melting-point additive proposed in the present invention and the characteristics of hydration moisture in the annealing separator affect the improvement of the uniformity of the average grain size of forsterite.

The present invention may be embodied in many different forms, and should not be construed as being limited to the disclosed embodiments and/or examples. In addition, it will be understood by those skilled in the art that various changes in form and details may be made thereto without departing from the technical spirit and essential features of the present invention. Therefore, it is to be understood that the above-described embodiments and/or examples are for illustrative purposes only, and the scope of the present invention is not limited thereto.

**[Description of symbols]**

| | | | |
|---|---|---|---|
| 100: | grain-oriented electrical steel sheet, | 101: | one end portion, |
| 102: | other end portion, | 110: | edge portion |
| 120: | center portion | | |

## Claims

1. A method for manufacturing a grain-oriented electrical steel sheet, comprising:
manufacturing a slab including, in wt%, Si: 1.5 to 4.5%, C: 0.70% or less (excluding 0%), Mn: 1.0% or less (excluding 0%), and a balance of Fe and other inevitable impurities;
hot-rolling the slab to manufacture a hot rolled sheet;
cold-rolling the hot-rolled sheet to manufacture a cold-rolled sheet;
primary recrystallization annealing the cold-rolled sheet; and
secondary recrystallization annealing the primary recrystallization annealed steel sheet,
wherein the secondary recrystallization annealing includes
a first heating step in which a steel sheet temperature is 650°C to 900°C, a second heating step in which the steel sheet temperature is higher than 900°C and equal to or lower than a soaking temperature, and a soaking step, and
the first heating step is performed in an atmosphere having an oxidation ability (PH₂O/PH₂) of 0.05 to 0.40, and the second heating step is performed in an atmosphere having an oxidation ability (PH₂O/PH₂) of 0.03 or less.

2. The method for manufacturing the grain-oriented electrical steel sheet of claim 1, wherein
the slab further includes one or more of Al: 0.015 to 0.040 wt%, N: 0.0055 wt% or less, and S: 0.0055 wt% or less.

3. The method for manufacturing the grain-oriented electrical steel sheet of claim 1, wherein
the slab further includes one or more of Sn: 0.03 to 0.10 wt%, Sb: 0.01 to 0.05 wt%, P: 0.01 to 0.10 wt%, Cu: 0.001 to 0.1 wt%, and Cr: 0.01 to 0.50 wt%.

4. The method for manufacturing the grain-oriented electrical steel sheet of claim 1, further comprising
after the primary recrystallization annealing and before the secondary recrystallization annealing, applying an annealing separator,
wherein the annealing separator includes 100 parts by weight of MgO and 0.01 to 0.50 parts by weight of an additive having a melting point of 900°C or less.

5. The method for manufacturing the grain-oriented electrical steel sheet of claim 4, wherein
the additive includes one or more of a hydroxide, a carbonate, an amide compound, a chromate, an oxide, an antimony compound, a chloride compound, a chloride oxide, a sulfur compound, a nitrogen compound, a bromide, a bromate, telluric acid, a vanadate, a borate, and a phosphorus compound.

6. The method for manufacturing the grain-oriented electrical steel sheet of claim 4, wherein
the additive includes one or more of Li, F, Na, K, Cu, Ba, Br, Mg, Ca, Zn, Sr, Cd, B, Al, Y, Ga, In, Tl, Ti, Sn, P, Nb, Sb, Bi, S, Cr, Te, V, W, Fe, Mn, Co, and Ni.

7. The method for manufacturing the grain-oriented electrical steel sheet of claim 4, wherein
the additive includes one or more of SrCl₂, Sb₂O₃, FeBr₂, CuCl, MnCl₂, B₂O₃, NiSO₄, CoSO₄, CuBr, and SnS.

8. The method for manufacturing the grain-oriented electrical steel sheet of claim 4, wherein
the MgO has a hydration moisture of 1.2 to 2.5 wt%.

9. The method for manufacturing the grain-oriented electrical steel sheet of claim 1, wherein
the first heating step includes 10 to 50 volume% of N₂ and 50 to 90 volume% of H₂, the second heating step includes 50 volume% or less of N₂ and 50 volume% or more of H₂, and the soaking step includes 99 volume% or more of H₂.

10. The method for manufacturing the grain-oriented electrical steel sheet of claim 1, wherein
the first heating step is performed at a heating rate of 5°C/hr to 90°C/hr, and the second heating step is performed at a heating rate of 5°C/hr to 30°C/hr.

11. The method for manufacturing the grain-oriented electrical steel sheet of claim 1, wherein
after the first heating step, forsterite is included in an amount of 2 to 15 wt% in a thickness range of 10 µm from a surface of the steel sheet toward an inner direction of the steel sheet, and after the second heating step, forsterite is included in an amount of 85 to 100 wt%.

12. A grain-oriented electrical steel sheet, comprising:
in wt%, C: 0.005% or less (excluding 0%), Si: 1.5% to 4.5%, Mn: 1.0% or less (excluding 0%), and a balance of Fe and other inevitably included impurities,
wherein a forsterite layer exists on one or both surfaces of a steel sheet substrate, and
a ratio (P₂/P₁) of an average grain size (P₂) of forsterite grains present in the forsterite layer of a center portion extending from more than 30% to less than 70% of the entire width of the steel sheet from the one end portion to an average grain size (P₁) of forsterite grains present in the forsterite layer of an edge portion, the edge portion extending from one end portion in a width direction of the steel sheet to 30% of an entire width of the steel sheet, and from 70% of the entire width of the steel sheet from the one end portion to an opposite end portion, is 0.8 to 1.2.

13. The grain-oriented electrical steel sheet of claim 12, further comprising
one or more of Al: 0.040 wt% or less, N: 0.0050 wt% or less, and S: 0.005 wt% or less.

14. The grain-oriented electrical steel sheet of claim 12, further comprising
one or more of Sn: 0.03 to 0.10 wt%, Sb: 0.01 to 0.05 wt%, P: 0.01 to 0.10 wt%, Cu: 0.001 to 0.1 wt%, and Cr: 0.01 to 0.50 wt%.

15. The grain-oriented electrical steel sheet of claim 12, wherein
the average grain size of the forsterite grains present in the forsterite layer of the edge portions is 0.3 to 2.0 µm, and the average grain size of the forsterite grains present in the forsterite layer of the center portion is 0.3 to 2.0 µm.
